# EUROPEAN PATENT SPECIFICATION

(11) **EP 4 456 994 B1**
(45) Date of publication and mention of the grant of the patent: **04.11.2026**
(21) Application number: 22854470.6
(22) Date of filing: 28.12.2022
(51) Int. Cl.: B01D 3/00, B01D 3/14

(54) **BATCH DISTILLATION METHOD WITH SIDE DISCHARGE POINT**
CHARGENDESTILLATIONSVERFAHREN MIT SEITENENTNAHMEPUNKT
PROCÉDÉ DE DISTILLATION DISCONTINUE AVEC POINT DE DÉCHARGE LATÉRAL

(30) Priority: 28.12.2021 BE 202106090
(43) Date of publication of application: 06.11.2024
(73) Proprietor: DE NEEF CHEMICAL PROCESSING N.V., 2220 Heist-op-den-Berg (BE)
(72) Inventor: VERMEULEN, Geert, 2220 HEIST-OP-DEN-BERG (BE)
(74) Representative: EP&C
(86) International application number: PCT/IB2022/062841
(87) International publication number: WO 2023/126852

(56) References cited:
- EP-A2- 0 928 782
- DE-A1- 10 106 664
- US-A1- 2003 050 479
- US-A1- 2006 090 995

## Description

### FIELD OF THE INVENTION

The present invention relates to a method for the batchwise distilling of a mixture of at least three components.

### BACKGROUND OF THE INVENTION

Continuous distillation is an efficient method for producing large amounts of material with a constant composition. However, when small amounts of material or varying product compositions are required, batch distillation may offer many advantages. Batch distillation is regularly used in industry, and especially in the pharmaceutical industry, food industry and fine chemicals industry, because batch distillation is much more flexible compared to continuous distillation. Smaller amounts of material can be processed in a batch distillation process. Furthermore, in batch distillation it is not unusual to employ the same distillation system for successive processing of different batches of different materials, which is not possible in continuous distillation. Furthermore, variables such as production rate, vacuum and temperature can easily be adjusted per batch in order to create optimum distillation conditions.

It is a regular occurrence that mixtures that comprise more than two components are processed in a distillation column. Separating these mixtures from one another at high purity is very time-consuming and may result in considerable product loss. This has to do with contamination of the various fractions with components that are led from the distillation column via one and the same discharge point (usually a top discharge point). During a batch distillation process, the mixture with several components, for example three components, is heated until a boiling point of a first component is reached. This component evaporates from the mixture according to the associated vapour/liquid equilibria of the components and goes up through the column until it reaches the discharge point at the top of the column. This top fraction of the discharged component generally comprises products that are undesirable in the main product and is also called first running. When the main product (also called main fraction) is then distilled from the mixture it will be mixed with the residues of the first component that are still present at the top of the column. To ensure that the main product no longer has any contaminants from the first running, the main product must go through the top of the column for a long time until it is free from contaminants of the lighter (more volatile) components. As well as being very time-consuming, this also causes considerable product loss. This causes problems, especially for food and pharmaceutical applications, because high requirements are imposed on the purity of the main product, for example a recovered solvent that is used in a batch reaction.

Furthermore, especially in pharmaceutical applications, much use is made of thermally unstable compounds as solvents or reactants. Removal of thermally unstable compounds by distillation is not obvious: because thermally unstable products are heated to high temperatures during distillation, there is a high probability of decomposition of these compounds. When the thermally unstable products decompose there is formation of decomposition products, which generally have a lower boiling point than the thermally unstable compound to be purified. During distillation, these decomposition products will accumulate at the top of the column, together with the thermally unstable compound that is to be removed. On discharge of the thermally unstable compound from the top of the column, the decomposition products will thus be entrained as contaminants. This is a problem especially in batchwise distilling. Because during a batch distillation process a mixture is exposed to high temperatures for a long time, this increases the chance of undesirable decomposition products being formed.

A solution to the above problem is for example to make use of double continuous distillation. In this case, in a first distillation step the heavy components, which have a relatively high boiling point, are removed via the bottom of the distillation column, then in a second distillation step the main product can be separated from the lower boiling components, to collect the main product via the bottom. However, this requires two distillation columns, or the distillation column of the first distillation step must be washed thoroughly in between. This is very time-consuming and causes product loss.

EP 0 928 782 A2 discloses the purification of maleic anhydride by distillation.

### DESCRIPTION OF THE INVENTION

One aim of the present invention is to overcome one or more of the aforementioned drawbacks at least partially, or to offer a suitable alternative.

The aim of the present invention is in particular to provide a batch distillation process with which thermally unstable compounds can be distilled at high purity.

Another aim of the present invention is to decrease product loss during a batch distillation process.

A further aim of the present invention is to reduce loss of time.

In a first aspect, the invention provides a method for recovering thermally unstable compounds as the main fraction from pharmaceutical waste or synthesis streams, wherein the thermally unstable compound is DMF, DMSO or 2-ethylhexyl lactate, comprising
- providing a batch distillation column comprising a bottom discharge point, a top discharge point and at least one side discharge point that is positioned between the bottom discharge point and the top discharge point,
- heating the pharmaceutical waste or synthesis stream at a pressure of less than 50 mbar in the batch distillation column, the pharmaceutical waste or synthesis stream comprising the thermally unstable compound, a low-boiling fraction with at least one component that has a boiling point that is lower than the boiling point of the thermally unstable compound, and a high-boiling fraction with at least one component that has a boiling point that is higher than the boiling point of the thermally unstable compound,
- discharging a first running comprising at least a portion of the low-boiling fraction via the top discharge point in the batch distillation column at a pressure of less than 50 mbar in the batch distillation column, said first running being discharged while said side discharge point(s) is/ are closed,
- after discharge of the first running, opening of said side discharge point(s) and simultaneous discharge of a main fraction comprising the thermally unstable compound via the side discharge point and of a top fraction comprising at least a portion of the low-boiling fraction via the top discharge point at a pressure of less than 50 mbar in the batch distillation column.

During the batch distillation process according to the invention, a pharmaceutical waste or synthesis stream is distilled in order to obtain the thermally unstable compound at high purity as a main fraction. To increase the purity of the discharged main fraction, the invention envisages a method wherein a batch distillation column is provided with a bottom discharge point, a top discharge point and at least one side discharge point that is positioned between the bottom discharge point and the top discharge point. In this distillation column, a pharmaceutical waste or synthesis stream can be heated in order to distil it. The pharmaceutical waste or synthesis stream comprises the thermally unstable compound, a low-boiling fraction with at least one component that has a boiling point that is lower than the boiling point of the thermally unstable compound, and a high-boiling fraction with at least one component that has a boiling point that is higher than the boiling point of the thermally unstable compound. In general, the waste or synthesis stream is a complex mixture with several components in each fraction. Furthermore, the components in the low-boiling fraction in particular may vary over time during distillation through formation of the low-boiling decomposition products, which also form part of the low-boiling fraction.

During the heating and distilling of the waste or synthesis stream, the pressure in the column is very low: it is less than 50 mbar (absolute pressure) in the whole column.

When the waste or synthesis stream is heated, the component(s) with the lowest boiling point will be the first to evaporate from the mixture. These vapours ascend from the waste or synthesis stream up to the top of the column, where they accumulate until they are discharged. In the starting phase of the batch distillation process, in particular components of the low-boiling fraction will evaporate, possibly together with a portion of the thermally unstable compound. These first vapours are discharged as first runnings from the top of the column. During discharge of the first runnings, the side discharge points are closed.

After discharge of the first runnings, a top fraction is discharged via the top discharge point. This top fraction comprises at least a portion of the low-boiling fraction, also including decomposition products, and optionally a portion of the thermally unstable compound. After discharge, this top fraction is largely condensed and returned to the column as reflux.

Simultaneously with discharge of the top fraction, a main fraction comprising the thermally unstable compound is discharged via the side discharge point.

The present inventors have found, surprisingly, that discharge of the main fraction via the side discharge point, in combination with the very low pressure of less than 50 mbar (absolute pressure), gives a very high yield and purity of the thermally unstable compound. Owing to the very low pressure, on the one hand decomposition of the thermally unstable compound to low-boiling decomposition products is prevented. As a result, both the yield of the thermally unstable compound, such as a solvent used in a pharmaceutical synthesis reaction, is increased, and the likelihood of contaminants is reduced. Furthermore, contamination of the main fraction is prevented, because the main fraction is discharged via the side discharge point, in contrast to the volatile, low-boiling components, which have accumulated at the top of the column, where they are discharged via the top discharge point. Accordingly, this supplies a purity of the main fraction that is higher than the purity of the discharged top fraction. Preferably the main fraction consists to at least 98 wt% of the thermally unstable product, and more preferably to at least 98.5 wt%. For certain thermally unstable compounds the purity of the main fraction is even higher, such as at least 99.8 wt%. An example of this is DMSO.

This is very favourable, because the main fraction with the thermally unstable product may thus be reused as a pharmaceutical solvent or in pharmaceutical synthesis reactions.

An additional advantage of the side offtake point is that the time taken for initiating the process is shorter. Normally the top discharge point of the distillation column is "washed" to remove all contaminants from the first running. This may take a long time and at the same time causes much product loss of the main product if high purities of the main product are desired. In the present arrangement, where a side discharge point is present, the top discharge point gives less chance of contamination, so washing does not have to take so long. This counteracts both time loss and product loss.

In one embodiment of the invention the pressure in the batch distillation column during heating of the pharmaceutical waste or synthesis stream is less than 30 mbar (absolute pressure), preferably less than 25 mbar (absolute pressure), and more preferably less than 20 mbar (absolute pressure). A lower pressure is preferred because this means less chance of decomposition of the thermally unstable compound. During distillation a pressure gradient will be present in the column. As a result, the pressure at the top of the column will generally be lower than the pressure at the bottom of the column.

The pressure in the batch distillation column may vary during distillation. In general, the pressure in the distillation column may be adjusted based on the percentage of low-boiling components in the top fraction. For example, at a high percentage of low-boiling decomposition products in the top fraction, it is possible to lower the pressure further in order to prevent decomposition of the thermally unstable compound. For example, use may be made of a predetermined limit value of low-boiling decomposition products in the top fraction. This makes the distillation process flexible and gives a further increase in the yield and purity of the thermally unstable compound in the main fraction.

In one embodiment of the invention the distillation column comprises more than one side discharge point, for example two or more side discharge points, which are located at various positions between the top discharge point and the bottom discharge point in the distillation column, and the main component is discharged via one of these side discharge points.

In one embodiment of the invention, the top fraction that is obtained from the top discharge point is led to a heat exchanger, where the top fraction is condensed. This condensed top fraction may then partly be returned as reflux stream to the distillation column. As an alternative, the condensed top fraction may be stored wholly or partly in for example a storage tank.

With the method according to the invention, any mixture with at least three components can be separated. Owing to the high purity of the main component that is obtainable with the invention, the process is particularly suitable for applications in the pharmaceutical or food industry, or for the fine or special chemicals industry, for example for recovering solvents from waste or residual streams. According to the invention, the thermally unstable compound is DMF, DMSO from pharmaceutical waste or synthesis streams, or 2-ethylhexyl lactate from a synthesis mixture.

In the case of a complex mixture, wherein it is desired is to obtain several components at high purity, several side discharge points may be placed in the distillation column, so that each component to be obtained can be discharged via its own side discharge point.

Also disclosed is a batch distillation column for recovering thermally unstable compounds from pharmaceutical waste or synthesis streams, for use in the method of the invention, comprising a distillation column with a bottom discharge point, a top discharge point and at least one side discharge point that is positioned between the bottom discharge point and the top discharge point, wherein the batch distillation column is configured for distilling at a pressure of less than 50 mbar (absolute pressure).

As stated, the combination of the side discharge point and the low pressure of less than 50 mbar (absolute pressure) during distillation gives a very high yield and purity of the thermally unstable compound. On the one hand, the very low pressure prevents decomposition of the thermally unstable compound to low-boiling decomposition products. This both increases the yield of the solvent and reduces the likelihood of contaminants. Furthermore, contamination is prevented, because the thermally unstable compound is discharged via the side discharge point, in contrast to volatile, low-boiling components from the waste or synthesis streams, which have accumulated at the top of the column and are discharged there.

The batch distillation column may be configured for distilling at a pressure of less than 30 mbar (absolute pressure), preferably less than 25 mbar (absolute pressure), and more preferably less than 20 mbar (absolute pressure). A lower pressure is preferred because this reduces the likelihood of decomposition of the thermally unstable compound. During distillation, a pressure gradient will be present in the column. As a result, the pressure at the top of the column will generally be lower than the pressure at the bottom of the column.

The side discharge point may comprise valves, which may have an open or a closed state. Operation of the valves may be controlled by control equipment. The advantage of this is that the valves of the side discharge points may remain closed during discharge of a first running, whereas they are opened during discharge of the top and main fraction.

Besides a single side discharge point, the distillation column may also comprise two or more side discharge points, such as three side discharge points, which are located between the top discharge point and the bottom discharge point. Typically the side discharge points will be placed at a height between the structured packing beds of the distillation column and the choice of the side discharge point, where the main fraction is discharged, will be determined on the one hand by the degree of separation between the low-boiling components and the main component, and on the other hand the degree of separation between the main component and the high-boiling components.

Also disclosed is a batch distillation system comprising a heating vat for heating the mixture to be separated, in fluid communication with a batch distillation column with a bottom discharge point, a top discharge point and at least one side discharge point that is positioned between the bottom discharge point and the top discharge point.

The heating vat may be configured for heating the pharmaceutical waste or synthesis streams at a pressure of less than 50 mbar (absolute pressure). This largely prevents decomposition of the thermally unstable product during heating of the pharmaceutical waste or synthesis stream. Preferably the pressure in the heating vat is less than 30 mbar (absolute pressure), or less than 25 mbar (absolute pressure), such as less than 20 mbar (absolute pressure).

The batch distillation system may comprise a heat exchanger that is in fluid communication with the top discharge point, wherein the heat exchanger is configured to receive and to condense the components discharged via the top discharge point. This condensed fraction may be stored as a residual product in a storage tank, or may serve as reflux by returning it to the column.

Within the batch distillation system, the distillation column may be in fluid communication with a reaction vessel. The reaction vessel may be positioned elsewhere and may be connected to the distillation column via for example pipelines. As an alternative, the reaction vessel may be a component of the distillation column, wherein the reaction vessel is for example present at the bottom of the column. Therefore the vapours being released from the reaction vessel can be led through the distillation column directly.

The batch distillation system may comprise an analyser, for example a gas chromatograph, which is configured to determine the composition of the top fraction and/or of the main fraction. Concentration profiles of the components in the column change during the process. Based on the analysed composition of the fractions, it is for example possible to select whether the valves of the side discharge point are to be opened or closed by means of the control equipment

### BRIEF DESCRIPTION OF THE DRAWINGS

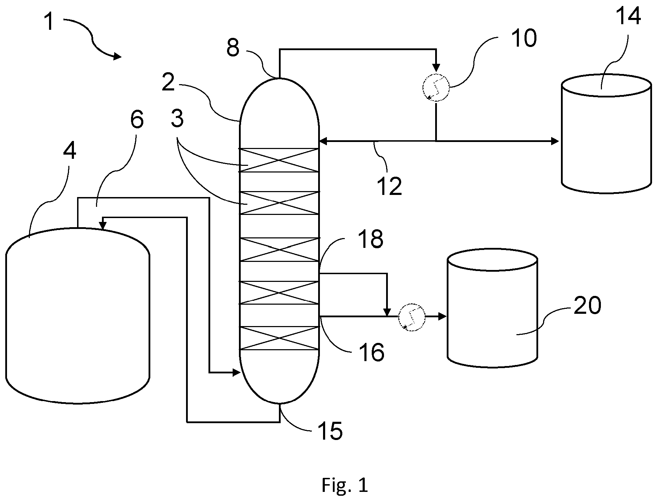

The invention will be explained hereunder on the basis of the appended figure, in which
Fig. 1 is a schematic diagram of the distillation column with side offtake point according to the method of the invention.

### DETAILED DESCRIPTION OF THE DRAWINGS

In Fig. 1, an embodiment of a batch distillation system with a batch distillation column with side offtake point for use in the method of the invention is indicated as a whole with reference number 1. The system 1 has a batch distillation column 2 with five structured packing beds 3. The batch distillation column is connected to a reaction vessel 4. A vapour stream 6 of a pharmaceutical waste or synthesis stream to be distilled, which comprises a thermally unstable compound being DMF, DMSO or 2-ethylhexyl lactate, a low-boiling fraction with at least one component that has a boiling point that is lower than the boiling point of the thermally unstable compound, and a high-boiling fraction with at least one component that has a boiling point that is higher than the boiling point of the thermally unstable compound, comes out of the top of the reaction vessel 4. The vapour stream 6 from the reaction vessel is led to the distillation column 2. At the start of the batch process, in particular a high concentration of vapour of the low-boiling fraction will be present in the distillation column 2. In the distillation column 2, depending on the liquid/vapour equilibrium, the vapours of the first component rise to the top of the column 2, to be discharged as first running via a top discharge point 8. During discharge of this first running, the side discharge points 16, 18 are closed.

After discharge of the first running, a top fraction is discharged via the top discharge point 8 to a heat exchanger 10. In the heat exchanger 10, the top fraction is condensed, after which it may be returned as reflux stream 12 to the batch distillation column 2, or after which it may be stored in a storage tank 14. The third component may be recycled to the reaction vessel 4 via a bottom discharge point 15 of the distillation column.

The side discharge points 16, 18 are still closed at the start of the batch process. Over time, the concentration profile of the components in the column changes, and the concentration of the thermally unstable compound to be recovered will increase, while the concentration of the low-boiling fraction decreases. At the moment when the concentration of the thermally unstable compound is high enough for a pure main fraction to be obtained from one of the side discharge points 16, 18, the valve to one (or more) of the side discharge points 16, 18 that is located at the point of the highest degree of separation between the low-boiling components and the main component on the one hand, and on the other hand the degree of separation between the main component and the high-boiling components, opens, and the thermally unstable compound flows as main fraction via the respective side discharge point 16 or 18 from the distillation column. This discharged main fraction may be stored in a separate storage tank 20, or partly returned to the column as reflux.

### EXAMPLES

### Distillation of DMSO

Distillation of a DMSO/water mixture is carried out in accordance with the method of the present invention. A quantity of the mixture is loaded in a distillation column with two side offtake points. During distillation, a portion of the top fraction that is discharged from the top discharge point and the main fraction that is discharged from the side discharge point is analysed to determine the composition of the two fractions. These compositions are shown in Table 1. The top fraction during offtake of the main run comprises, besides the main component, impurities at values far above the maximum limit of 150 ppm. The main fraction in contrast is found to be free from impurities apart from water.

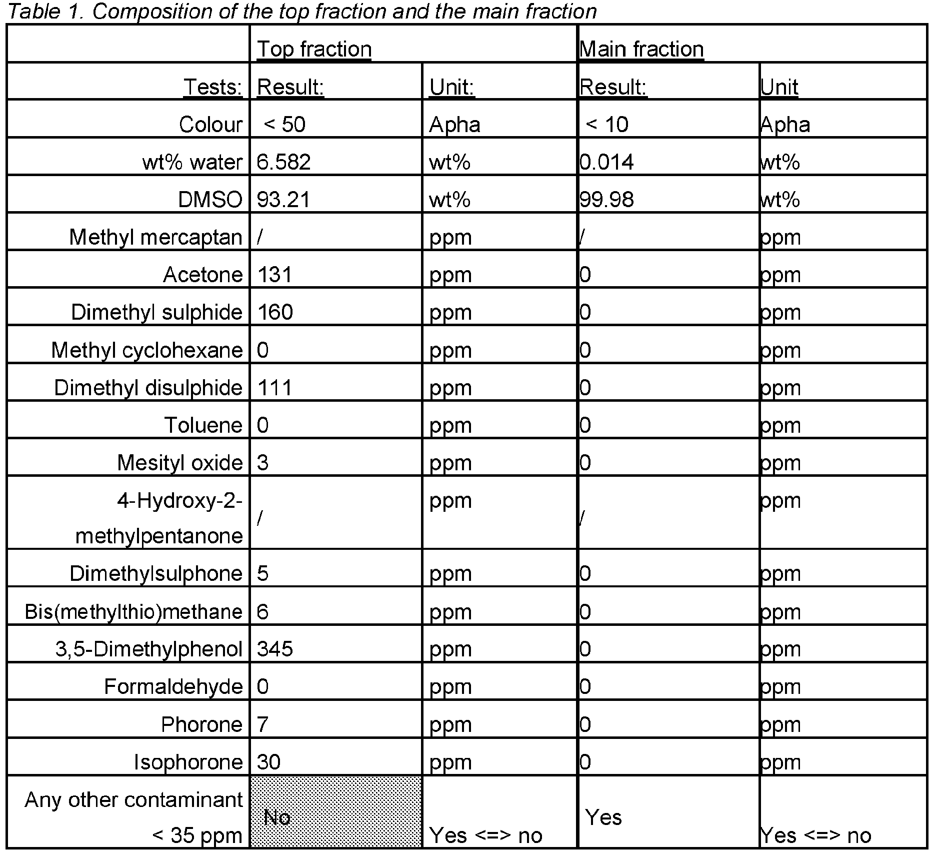

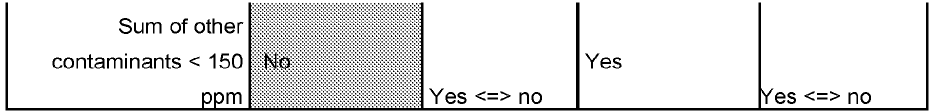

### Distillation of 2-ethylhexyl lactate

Distillation of a 2-ethylhexyl lactate mixture was carried out in accordance with the method of the present invention. A quantity of the mixture was loaded in a distillation column with a side offtake point. The pressure at the bottom of the column was 20 mbar (absolute pressure), and at the top of the column between 5-15 mbar (absolute pressure). The bottom of the column was heated to 150°C. The vapours from the heated mixture rise, so that the temperature at the top of the column rose to 72°C.

A first running of volatile, low-boiling components and a portion of the 2-ethylhexyl lactate was discharged via the top discharge point. During discharge of the first running the side discharge point valves were closed.

After discharge of the first running, a top fraction with largely low-boiling components and a portion of the 2-ethylhexyl lactate was discharged via the top discharge point. This top fraction was largely condensed and led back to the column as reflux.

Simultaneously, a main fraction that largely consists of 2-ethylhexyl acetate was discharged via the side discharge point. Residual products from distillation remain behind in the bottom of the reactor as residue. The compositions of the various streams are given in Table 2.

**Table 2. Composition of the starting mixture, the first running, the top fraction, the main fraction and the residue from distillation of a 2-ethylhexyl lactate mixture**

| Composition (wt%) | Starting mixture | First running | Top fraction | Main fraction | Residue |
|---|---|---|---|---|---|
| Lactic acid | 0.3 | 0.9 | > 0.1 | 0.01-0.1 | 0.1 |
| 2-Ethylhexanol | 24.0 | 60 | < 5 | 1-1.3 | < 0.1 |
| Water | 0.6 | < 2 | < 1 | 0.01-0.1 | < 0.1 |
| Salts | 1.6 | < 0.1 | < 0.1 | 0.0 | 8 |
| 2-Ethylhexyl lactate | 62.0 | 37 | remainder | 98.5 | < 20 |
| LA2 (dilactate ester) | 10.5 | < 0.1 | < 0.1 | < 0.1 | > 55 |
| LA3 (trilactate ester) | 1.0 | < 0.1 | < 0.1 | < 0.1 | > 15 |
| **Mass balance (wt%)** | | **30** | **remainder** | **45** | **20** |

As can be seen in Table 2, the main fraction consists largely of 2-ethylhexyl lactate. Relative to the top fraction, the purity of the main fraction is many times higher.

## Claims

1. Method for recovering a thermally unstable compound as main fraction from pharmaceutical waste or synthesis streams, wherein the thermally unstable compound is DMF, DMSO or 2-ethylhexyl lactate, comprising
- providing a batch distillation column comprising a bottom discharge point (15), a top discharge point (8) and at least one side discharge point (16, 18) that is positioned between the bottom discharge point (15) and the top discharge point (8),
- heating the pharmaceutical waste or synthesis stream at a pressure of less than 50 mbar in the batch distillation column (2), the pharmaceutical waste or synthesis stream comprising the thermally unstable compound, a low-boiling fraction with at least one component that has a boiling point that is lower than the boiling point of the thermally unstable compound, and a high-boiling fraction with at least one component that has a boiling point that is higher than the boiling point of the thermally unstable compound,
- discharging a first running comprising at least a portion of the low-boiling fraction via the top discharge point (8) in the batch distillation column (2) at a pressure of less than 50 mbar in the batch distillation column (2), said first running being discharged while said side discharge point(s) is/are closed,
- after discharge of the first running, opening of said side discharge point(s) and simultaneous discharge of a main fraction comprising the thermally unstable compound via the side discharge point (8) and of a top fraction comprising at least a portion of the low-boiling fraction via the top discharge point (8) at a pressure of less than 50 mbar in the batch distillation column (2).

2. Method according to one of the preceding claims, wherein the pressure in the batch distillation column during heating of the pharmaceutical waste or synthesis stream is less than 30 mbar, preferably less than 25 mbar, and more preferably less than 20 mbar.

3. Method according to claim 1 or 2, wherein the pressure in the batch distillation column varies during discharge of the main fraction and the top fraction.

4. Method according to claim 3, wherein the pressure in the batch distillation column is lowered at a certain quantity of low-boiling components in the top fraction.

5. Method according to one of the preceding claims, wherein the discharged main fraction consists to at least 98 wt% of the thermally unstable compound, preferably to at least 98.5 wt%.

6. Method according to claim 5, wherein the thermally unstable compound is DMSO, and wherein the discharged main fraction consists of DMSO to at least 99.8 wt%.

7. Method according to one of the preceding claims, wherein the distillation column comprises two or more side discharge points (16, 18) that are located between the top discharge point (8) and the bottom discharge point (15), wherein a main fraction comprising the second component is discharged via one of the side discharge points (16, 18).

## Patentansprüche

1. Verfahren zum Rückgewinnen einer thermisch instabilen Verbindung als Hauptfraktion aus pharmazeutischen Abfällen oder Syntheseströmen, wobei die thermisch instabile Verbindung DMF, DMSO oder 2-Ethylhexyllactat ist, Folgendes umfassend
- Bereitstellen einer Chargendestillationskolonne, die eine untere Austragstelle (15), eine obere Austragstelle (8) und mindestens eine Seitenaustragstelle (16, 18) umfasst, die zwischen der unteren Austragstelle (15) und der oberen Austragstelle (8) angeordnet ist,
- Erhitzen des pharmazeutischen Abfalls oder des Synthesestroms bei einem Druck von weniger als 50 mbar in der Chargendestillationskolonne (2), der pharmazeutische Abfall oder der Synthesestrom umfassend die thermisch instabile Verbindung, eine niedrigsiedende Fraktion mit mindestens einer Komponente, die einen Siedepunkt aufweist, der niedriger als der Siedepunkt der thermisch instabilen Verbindung ist, und eine hochsiedende Fraktion mit mindestens einer Komponente, die einen Siedepunkt aufweist, der höher als der Siedepunkt der thermisch instabilen Verbindung ist,
- Austragen eines ersten Durchlaufs, der mindestens einen Teil der niedrigsiedenden Fraktion umfasst, über die obere Austragstelle (8) in der Chargendestillationskolonne (2) bei einem Druck von weniger als 50 mbar in der Chargendestillationskolonne (2), wobei der erste Durchlauf ausgetragen wird, während die Seitenaustragstelle(n) geschlossen ist/sind,
- nach Austragen des ersten Durchlaufs, Öffnen der Seitenaustragstelle(n) und gleichzeitiger Austrag einer Hauptfraktion, die die thermisch instabile Verbindung umfasst, über die Seitenaustragstelle (8) und einer oberen Fraktion, die mindestens einen Anteil der niedrigsiedenden Fraktion umfasst, über die obere Austragstelle (8) bei einem Druck von weniger als 50 mbar in der Chargendestillationskolonne (2).

2. Verfahren nach einem der vorhergehenden Ansprüche, wobei der Druck in der Chargendestillationskolonne beim Erhitzen des pharmazeutischen Abfalls oder des Synthesestroms weniger als 30 mbar, bevorzugt weniger als 25 mbar und besonders bevorzugt weniger als 20 mbar beträgt.

3. Verfahren nach Anspruch 1 oder 2, wobei der Druck in der Chargendestillationskolonne beim Austrag der Hauptfraktion und der oberen Fraktion variiert.

4. Verfahren nach Anspruch 3, wobei der Druck in der Chargendestillationskolonne bei einer bestimmten Menge an niedrigsiedenden Komponenten in der oberen Fraktion abgesenkt wird.

5. Verfahren nach einem der vorhergehenden Ansprüche, wobei die ausgetragene Hauptfraktion zu mindestens 98 Gew.-%, vorzugsweise zu mindestens 98,5 Gew.-%, aus der thermisch instabilen Verbindung besteht.

6. Verfahren nach Anspruch 5, wobei die thermisch instabile Verbindung DMSO ist und wobei die ausgetragene Hauptfraktion zu mindestens 99,8 Gew.-% aus DMSO besteht.

7. Verfahren nach einem der vorhergehenden Ansprüche, wobei die Destillationskolonne zwei oder mehr Seitenaustragstellen (16, 18) umfasst, die sich zwischen der oberen Austragstelle (8) und der unteren Austragstelle (15) befinden, wobei eine Hauptfraktion, die die zweite Komponente umfasst, über eine der Seitenaustragstellen (16, 18) ausgetragen wird.

## Revendications

1. Procédé de récupération d'un composé thermiquement instable comme fraction principale à partir d'un flux de déchets ou de synthèse pharmaceutique(s), dans lequel le composé thermiquement instable est le DMF, le DMSO ou le lactate de 2-éthylhexyle, comprenant
- fourniture d'une colonne de distillation discontinue comprenant un point d'évacuation de fond (15), un point d'évacuation de tête (8) et au moins un point d'évacuation latéral (16, 18) qui est positionné entre le point d'évacuation de fond (15) et le point d'évacuation de tête (8),
- chauffage du flux de déchets ou de synthèse pharmaceutique(s) à une pression inférieure à 50 mbar dans la colonne de distillation discontinue (2), le flux de déchets ou de synthèse pharmaceutique(s) comprenant le composé thermiquement instable, une fraction à bas point d'ébullition comportant au moins un composant ayant un point d'ébullition inférieur au point d'ébullition du composé thermiquement instable, et une fraction à haut point d'ébullition comportant au moins un composant ayant un point d'ébullition supérieur au point d'ébullition du composé thermiquement instable,
- évacuation d'un premier écoulement comprenant au moins une partie de la fraction à bas point d'ébullition par le point d'évacuation de tête (8) dans la colonne de distillation discontinue (2) à une pression inférieure à 50 mbar dans la colonne de distillation discontinue (2), ledit premier écoulement étant évacué pendant que ledit ou lesdits points d'évacuation latéraux est/sont fermé(s),
- après évacuation du premier écoulement, ouverture dudit ou desdits points d'évacuation latéraux et évacuation simultanée d'une fraction principale comprenant le composé thermiquement instable par le point d'évacuation latéral (8) et d'une fraction de tête comprenant au moins une partie de la fraction à bas point d'ébullition par le point d'évacuation de tête (8) sous une pression inférieure à 50 mbar dans la colonne de distillation discontinue (2).

2. Procédé selon l'une des revendications précédentes, dans lequel la pression dans la colonne de distillation discontinue pendant le chauffage du flux de déchets ou de synthèse pharmaceutique(s) est inférieure à 30 mbar, de préférence inférieure à 25 mbar, et de manière plus préférée inférieure à 20 mbar.

3. Procédé selon la revendication 1 ou 2, dans lequel la pression dans la colonne de distillation discontinue varie pendant l'évacuation de la fraction principale et de la fraction de tête.

4. Procédé selon la revendication 3, dans lequel la pression dans la colonne de distillation discontinue est abaissée à une certaine quantité de composants à bas point d'ébullition dans la fraction de tête.

5. Procédé selon l'une des revendications précédentes dans lequel la fraction principale évacuée est constituée d'au moins 98 % en poids du composé thermiquement instable, de préférence d'au moins 98,5 % en poids.

6. Procédé selon la revendication 5, dans lequel le composé thermiquement instable est le DMSO, et dans lequel la fraction principale évacuée est constituée d'au moins 99,8 % en poids de DMSO.

7. Procédé selon l'une des revendications précédentes, dans lequel la colonne de distillation comprend deux ou plusieurs points d'évacuation latéraux (16, 18) situés entre le point d'évacuation de tête (8) et le point d'évacuation de fond (15), une fraction principale comprenant le deuxième composant étant évacuée par l'un des points d'évacuation latéraux (16, 18).
